# EUROPÄISCHE PATENTSCHRIFT

(11) **EP 1 055 120 B1**
(45) Veröffentlichungstag und Bekanntmachung des Hinweises auf die Patenterteilung: **17.11.2010**
(21) Anmeldenummer: 99907383.6
(22) Anmeldetag: 19.01.1999
(51) Int. Cl.: G01N 30/93

(54) **DÜNNE PORÖSE SCHICHTEN FÜR DIE PLANARE CHROMATOGRAPHIE**
THIN POROUS LAYERS FOR THIN-LAYER CHROMATOGRAPHY
COUCHES MINCES POREUSES POUR LA CHROMATOGRAPHIE EN COUCHE MINCE

(30) Priorität: 11.02.1998 DE 19805395
(43) Veröffentlichungstag der Anmeldung: 29.11.2000
(73) Patentinhaber: Merck Patent GmbH, 64293 Darmstadt (DE)
(72) Erfinder: HAUCK, Heinz-Emil, D-64823 Gross-Umstadt (DE); EYMANN, Rolf, D-64354 Reinheim (DE); SÄTTLER, Günther, D-64354 Reinheim (DE)
(86) Internationale Anmeldenummer: PCT/EP1999/000284
(87) Internationale Veröffentlichungsnummer: WO 1999/041602

(56) Entgegenhaltungen:
- EP-A- 0 170 143
- DE-A- 1 943 304
- DE-A- 2 155 281
- DE-A- 2 809 137
- DE-A- 3 524 357
- DE-A- 19 509 949

## Beschreibung

Die Erfindung betrifft Trennmaterialien für die planare Chromatographie, die poröse Trennmittelschichten geringer Dicke aufweisen, und die zur Trennung von Substanzen im nL-Maßstab geeignet sind.

Steigende Anforderungen bezüglich der Leistungsfähigkeit von Analysenmethoden, insbesondere betreffend Zeitbedarf und Nachweisempfindlichkeit, erfordern in der Dünnschichtchromatographie (planare Chromatographie) die Bereitstellung von Trennmittelschichten, die deutlich dünner sind, als sie bisher zugänglich sind; d.h. dünner als 50 µm. Von Cremer und Nau (1968) wurden zwar Versuche beschrieben (Naturwissenschaften 55, Seite 651), bei denen chromatographische Trennungen an ultradünnen Schichten ausgeführt wurden. Die verwendeten Schichten bestanden aus Indium-, Wismut- oder Zinnoxid und besaßen eine Schichtdicke von 1 µm oder weniger. Diese Schichten wurden aufgedampft. An Modellsystemen konnten Substanzen getrennt werden; jedoch hat die Methode keine weitere Anwendung erfahren. Für die Dünnschichtchromatographie werden somit bisher partikuläre Trennmittel, die sphärisch oder unregelmäßig geformt sein können, auf einen Träger aufgebracht, wobei Hilfsmittel wie z.B. Binder, Fluoreszenzindikatoren, Reflexionsverstärker oder ähnliches der Schicht zugefügt werden können. Derartige Zusätze sind dem Fachmann geläufig. Dabei erscheint es nicht möglich, die Schichtdicke der Trennmittelschicht auf weniger als 50 µm zu verringern.

Es wurde gefunden, daß mit einem völlig anderen Herstellprinzip, wie es bei der Herstellung von Trennmittelschichten aus Silicagel für die Dünnschichtchromatographie bisher nicht gebräuchlich ist, wesentlich dünnere Trennmittelschichten, beispielsweise mit ca. 10 µm Schichtdicke, bereitgestellt werden können. Diese Herstellverfahren und die mittels dieser Verfahren bereitgestellten Trennmaterialien für die Dünnschichtchromatographie sind Gegenstand dieser Erfindung.

In DE 19 08 695 werden Methoden offenbart, um auf Kunststofffolien dünne zusammenhängende Filme aus Titan- und/oder Zirkondioxid mit einer Dicke unter 1 µm aufzutragen. Damit soll vermieden werden, dass Verunreinigungen aus dem Kunststoff in die Trennmittelschicht geraten. Diese Schichten aus Titan- und/oder Zirkondioxid besitzen jedoch keine chromatographische Aktivität.

Gegenstand der Erfindung sind Trennmaterialien für die Dünnschichtchromatographie, bestehend aus einem Basisträger und einer Trennmittelschicht, erhältlich durch folgende Arbeitsschritte:
a) Reinigung des Basisträgers;
b) Aufbringen eine Flüssigkeitsfilms, enthaltend einen Polykieselsäureester auf einem Basisträger;
c) Einbringen des Trägers mit dem Flüssigkeitsfilm in eine Atmosphäre, die die Hydrolyse und weitere Polymerisation des Polykieselsäureesters bewirkt;
d) Hydrolyse und weitere Polymerisation des Polykieselsäureesters bei konstanter Temperatur;
e) Waschen der Kieselsäureschicht;
f) Trocknung der Kieselsäureschicht.

Gegenstand der vorliegenden Erfindung sind insbesondere Trennmaterialien für die Dünnschichtchromatographie mit einem Basisträger und einer in-situ durch Hydrolyse und Polymerisation erzeugten Trennmittelschicht mit einer Schichtdicke von 2 - 20 µm, welche durch folgende Arbeitsschritte erhältlich ist :
a) Reinigung des Basisträgers;
b) Aufbringen eines Flüssigkeitsfilms, enthaltend einen Polykieselsäureester, auf einen Basisträger;
c) Einbringen des Trägers mit dem Fiüssigkeitsfilm in eine Atmosphäre, die die Hydrolyse und weitere Polymerisation des Polykieselsäureesters bei konstanter Temperatur bewirkt;
e) Waschen der Kieselsäureschicht und
f) Trocknung der Kieselsäureschicht,
wobei in Schritt b) der Flüssigkeitsfilm entweder durch Aufsprühen der Lösung aufgebracht wird oder die Flüssigkeit zunächst an einer Stelle aufgetragen wird und der Träger um die Auftragsstelle rotiert oder indem der Flüssigkeitsfilm mit einem Rollrakel verteilt wird.

Gegenstand der Erfindung sind außerdem Trennmaterialien mit den genannten Merkmalen, deren Kieselsäureoberfläche mit Separationseffektoren derivatisiert ist.

Vorzugsweise weisen die so charakterisierten Trennmaterialien in der Trennschicht Mesoporen auf, die durch Behandlung mit wässriger Ammoniaklösung vergrößert worden sind.

Gegenstand der Erfindung ist schließlich auch ein Verfahren zur Herstellung einer in-situ durch Hydrolyse und Polymerisation erzeugten Trennmittelschicht auf einem Basisträger für die Dünnnschichtchromatographie mit einer Schichtdicke von 2 . 20 µm mit folgenden Verfahrensschritten:
a) Reinigung des Basisträgers;
b) Aufbringen eines Flüssigkeitsfilms, enthaltend einen Polykieselsäureester, auf einen Basisträger;
c) Einbringen des Trägers mit dem Flüssigkeitsfilm in eine Atmosphäre, die die Hydrolyse und weitere Polymerisation des Polykieselsäureesters bei konstanter Temperatur bewirkt;
d) Hydrolyse und weitere Polymerisation des Polykieselsäureesters bei konstanter Temperatur:
e) Waschen der Kieselsäureschicht:
f) Trocknung der Kieselsäureschicht,
wobei in einer bevorzugten Ausführungsformen im Verfahrensschritt b) der Flüssigkeitsfilm durch Aufsprühen der Lösung aufgebracht wird oder die Flüssigkeit zunächst an einer Stelle aufgetragen wird und anschließend der Träger um die Auftragsstalle rotiert oder indem der Flüssigkeitsfilm mit einem Rollrakel verteilt wird,
oder wobei in einer besonders bevorzugten Ausführungsform die Flüssigkeit zunächst an einer Stelle aufgetragen wird und anschließend der Träger um die Auftragsstalle rotiert, wobei die Rotationsachse senkrecht zur Fläche des Basisträgers ist

Ein weiterer Gegenstand der vorliegenden Erfindung ist auch die Verwendung der erfindungsgemäßen Trennmaterialien mit den genannten Merkmalen für die dünnschichtchromatographische Trennung mindestens zweier Substanzen.

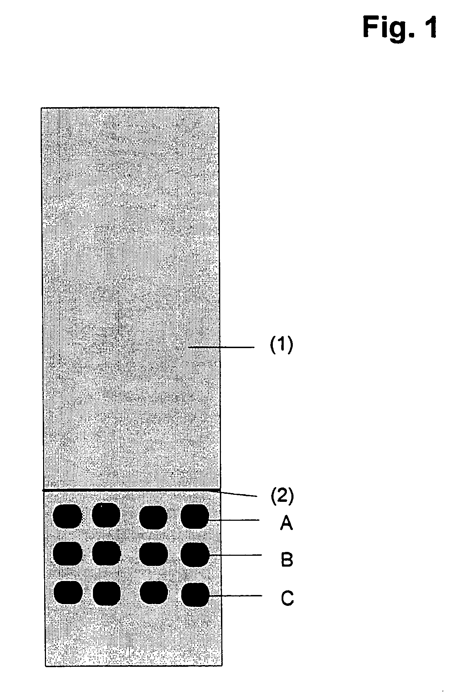

Abbildung 1 zeigt die Trennung eines Farbstoffgemisches in schematisierter und vergrößerter Darstellung. Auf dem Trennmaterial (1) sind auf vier Bahnen die aufgetrennten Farbstoffe A, B und C dargestellt; (2) markiert die Lage der Elutionsmittelfront. Die Originalgröße des Trennmaterials beträgt ca. 14 x 56 mm; weitere experimentelle Details finden sich in der Beschreibung (Anwendungsbeispiel A).

Basisträger im Sinne der vorliegenden Erfindung bedeuten im wesentlichen die für die Dünnschichtchromatographie gebräuchlichen Basisträger wie z.B. Kunststoff- oder Metallfolien, insbesondere aber Glasplatten. Wegen der Miniaturisierung der erfindungsgemäßen Trennmaterialien können grundsätzlich aber auch andere Basisträger eingesetzt werden, die bei gebräuchlichen Dünnschichtmaterialien bisher beispielsweise aus Kostengründen nicht verwendet wurden; dabei ist an Siliziumscheiben oder Quarzglas zu denken.

Die chromatographische Trennung findet in der Trennmittelschicht statt. Im Stand der Technik besteht die Trennmittelschicht bei Trennmaterialien für die Dünnschichtchromatographie beispielsweise aus partikulärem Kieselgel, das mit Separationseffektoren modifiziert sein kann, und weitere Zusätze, wie z.B. Binder, Fluoreszenzfarbstoffe oder Reflektionsverstärker enthalten kann. Die erfindungsgemäßen Trennmittelschichten bestehen aus Kieselgel, das durch Hydrolyse und Polymerisation aus Polykieselsäureestern in situ erzeugt wird. Die erfindungsgemäßen Trennschichten können ebenfalls übliche Zusätze enthalten; beispielsweise können sie mit Separationseffektoren modifiziert sein, oder es kann beispielsweise ein Fluoreszenzindikator in die Trennmittelschicht eingearbeitet sein.

Die Alkoholkomponente der erfindungsgemäß verwendeten Polykieselsäureester leiten sich von C₁-C₅-Alkoholen, insbesonders von Methanol, Ethanol, n-Propanol oder i-Propanol her. Das mittlere Molekulargewicht der erfindungsgemäß verwendeten Polykieselsäureester liegt zwischen 500 und 2000; bevorzugterweise zwischen 800 und 1500. Derartige Polykieselsäureester sind kommerziell erhältlich. Die erfindungsgemäß verwendeten Polykieselsäureester können als Reinsubstanzen oder als Mischungen mit verschiedenen Molekulargewichten und/oder unterschiedlichen Alkoholkomponenten eingesetzt werden. Es ist auch möglich, die erfindungsgemäß verwendeten Polykieselsäureester mit geeigneten Lösungsmitteln zu verdünnen; als besonders geeignet haben sich C₁-C₅-Alkoholen, beispielsweise Methanol, Ethanol, n-Propanol oder i-Propanol, erwiesen. Dabei wird das Lösungsmittel bevorzugterweise so ausgewählt, daß Lösungsmittel und Alkoholkomponente des Polykieselsäureesters gleich sind. Der Gehalt der verdünnten Lösung an Polykieselsäureester sollte mindestens 30 Gew.-% betragen.

Die Reinigung des Basisträgers ist ein erster wichtiger Arbeitsschritt. Dabei hat sich die Verwendung von Natronlauge und Detergenzien (z.B. Extran^{®}) bewährt; vor dem nächsten Arbeitsschritt wird der Basisträger gründlich mit Wasser gespült.

Der Polykieselsäureester muß anschließend als gleichmäßiger Flüssigkeitsfilm auf den Basisträger aufgebracht werden. Dafür haben sich insbesondere zwei Verfahren bewährt:
a) Ein ausreichendes Flüssigkeitsvolumen enthaltend den Polykieselsäureester wird in die Mitte des Basisträgers aufgebracht; anschließend wird der Basisträger um die Achse, die durch die Auftragsstelle geht, und die senkrecht zur Fläche des Basisträgers ausgerichtet ist, gedreht, sodaß ein gleichmäßiger Flüssigkeitsfilm entsteht.
b) Der Polykieselsäureester wird unverdünnt oder verdünnt auf den Basisträger aufgesprüht.

Weitere Verfahren sind beispielsweise: Das Auftragen mit einer siebdruckähnlichen Technik oder mittels eines Rollrakels.

Die Atmosphäre, in der die weitere Hydrolyse und Polymerisation des Polykieselsäureesters erfolgt, enthält neben Wasserdampf entweder Ammoniak oder Salzsäure. Eine derartige Atmosphäre kann beispielsweise erzeugt werden, indem man den mit der flüssigen Polykieselsäureester versehenen Basisträger in eine Kammer einbringt, in der sich in einem offenen Gefäß rauchende Salzsäure befindet, und anschließend die Kammer mit Heißdampf beaufschlagt.

Die Polymerisation der Polykieselsäureester findet bevorzugt bei 15 bis 80 °C, insbesondere bei 40 bis 60 °C, statt und dauert in Abhängigkeit von der Temperatur 3 Minuten bis eine Stunde. Nach der Polymerisation und dem Waschen der Kieselsäureschicht wird das Trennmaterial mit üblichen Methoden bei 15 bis 120 °C getrocknet (Dauer je nach Temperatur 5 bis 30 Minuten). Die erfindungsgemäß erhaltenen Trennschichten weisen eine Dicke von 2 bis 20 µm, insbesondere von 4 bis 10 µm auf.

Die Mesoporen, die bei dem erfindungsgemäßen Verfahren entstehen, können mit üblichen Methoden, insbesondere auch durch Behandlung mit wäßriger Ammoniaklösung, vergrößert werden.

Die Kieselgelschicht auf dem Basisträger kann zusätzlich mit üblichen Verfahren derivatisiert werden. Dabei werden beispielsweise Separationseffektoren, wie z.B. ionische Gruppen für die Ionenaustauschchromatographie oder hydrophobe Gruppen für die reversed-phase-Chromatographie eingeführt. Derartige Derivatisierungsverfahren und geeignete Separationseffektoren sind dem Fachmann bekannt und in Handbüchern wie Packings and Stationary Phases in Chromatographic Techniques (K.K: Unger ed.; Marcel Dekker, New York und Basel (1990)) oder Porous Silica (K.K. Unger ed.; Elsevier, Amsterdam, Oxford, New York (1979)) beschrieben. Für Trennmittel für die Dünnschichtchromatographie sind insbesonders Derivatisierungsverfahren geeignet, wie sie in DE 27 12 113 und DE 28 09 137 offenbart sind.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

### Herstellungsbeispiele

### Beispiel 1

Eine Trägerglasplatte 20 x 20 cm, wie sie für die Dünnschichtchromatographie üblich ist, wird mit Natronlauge und anschließend mit Extran^{®} und schließlich mit Wasser gereinigt. Anschließend werden ca. 0,8 ml einer 50-%-igen (v:v) ethanolischen Lösung von Polyethoxysiloxan (mittleres Molekulargewicht ca. 1100) aufgesprüht. Die besprühte Glasplatte wird in einen geschlossenen Raum, in dem sich ein offenes Gefäß mit rauchender Salzsäure befindet, eingebracht, mit Heißdampf (4 bar) beaufschlagt und 30 Minuten bei 60 °C behandelt. Anschließend wird die beschichtete Glasplatte mit Wasser gewaschen und getrocknet. Für den Gebrauch wird die Glasplatte in Stücke mit dem gewünschten Format zerschnitten.

Es wird ein Trennmaterial für die Dünnschichtchromatographie erhalten, dessen Trennmittelschicht aus porösen Kieselgel mit einer Dicke von ca. 5 µm besteht. Die Trennmittelschicht weist eine spezifische Oberfläche von 410 m²/g und ein spezifisches Porenvolumen von ca. 0,32 ml/g auf (Stickstoffadsorption nach BET); daraus ergibt sich eine mittlere Porenweite von 3 nm.

### Beispiel 2

Ein Trennmaterial hergestellt nach Beispiel 1 wird für 5 Minuten in eine Lösung von Methyloctadecyldichlorsilan (10 Gew.-% in Toluol) eingetaucht. Anschließend wird das Trennmaterial durch Eintauchen in verschiedene Lösungsmittel gespült: 5 Minuten in Toluol, je 1 Minute in Dichlormethan/Methanol (1:1; v:v), in Aceton/Wasser (1:1; v:v) und in Methanol. Die Platte wird anschließend 30 Minuten bei Raumtemperatur im Abzug und noch 15 Minuten bei 120 °C im Trockenschrank getrocknet.

Es resultiert ein C₁₈-modifiziertes Trennmaterial für die reversed-phase-Chromatographie.

### Beispiel 3

In einer Konditionierkammer werden 150 ml rauchende Salzsäure vorgelegt. Die geschlossene Kammer wird im Trockenschrank auf 60 °C vorgeheizt (1 Stunde). Die Kammer wird aus dem Trockenschrank entnommen, und Wasserdampf in die Kammer gegeben (Absperrventil leicht öffnen, Dauer ca. 5 Sekunden).

Eine gewaschene Glasplatte (10 x 20 cm) wird mit Ethanol gereinigt und getrocknet. Anschließend wird die Glasplatte mit 400 µl Polyethoxysiloxan (mittlereres Molekulargewicht 1000) und mit einem 12 µm Rollrakel abgezogen. Die beschichtete Glasplatte wird auf einer Styropor-Platte (20 x 20 cm) in die Konditionierkammer gelegt und 30 Minuten bei 60 °C erwärmt. Anschließend wird die DC-Platte mit Wasser gewaschen und an der Luft getrocknet.

Die Kieselgelschicht weist eine Schichtdicke von 12 ± 1 µm auf und haftet fest an der Glasplatte.

Die Kieselgelschicht kann, wie in Beispiel 2 beschrieben, derivatisiert werden.

### Anwendungsbeispiele

### Anwendungsbeispiel A Trennung eines Farbstoffgemisches

Auf einen Dünnschichtträger im Format 14 x 56 mm hergestellt nach Beispiel 1 wird in vier Bahnen mit einer Hamilton-Spritze jeweils 50 nL eines Farbstoffgemisches enthaltend je 0,1 Gew.-% Violett I, Nitroechtblau 2B und Sico-Fettblau 50401 N gelöst in Toluol aufgetragen. Als Fließmittel wird Toluol in einer Normalkammer (50 ml Becherglas mit Uhrglas als Deckel) ohne Kammersättigung benutzt. Nach einer Laufzeit von einer Minute ist eine ausreichende Trennung erreicht; die Laufstrecke beträgt 8 mm.

In Abbildung 1 ist das Ergebnis dieses Versuches schematisiert dargestellt.

### Anwendungsbeispiel B Chromatographie von Cholesterin

Auf einen Dünnschichtträger im Format 14 x 56 mm hergestellt nach Beispiel 2 werden mit einer Hamilton-Spritze 50 nL einer Lösung von Cholesterin (0,1 Gew.-% in Dichlormethan/Methanol (1:1;v:v)) aufgetragen und das Chromatogramm in Aceton/Wasser (95:5;v:v) entwickelt (Kammersättigung; Laufstrecke 7 mm; Laufzeit ca. 5 Minuten). Nach dem Trocknen der Platte wird mit MnCl₂-Schwefelsäurereagenz gesprüht und die Färbung im Trockenschrank bei 120 °C (5 Minuten) entwickelt.

Es wurde ein hRf-Wert von 28,6 gefunden; dieser Wert zeigt, daß die Kieselgelschicht modifiziert ist und das Cholesterin von der stationären Phase reteniert wird.

## Patentansprüche

1. Trennmaterial für die Dünnschichtchromatographie mit einem Basisträger und einer in-situ durch Hydrolyse und Polymerisation erzeugten Trennmittelschicht mit einer Schichtdicke von 2 - 20 µm, erhältlich durch folgende Arbeitsschritte:
a) Reinigung des Basisträgers;
b) Aufbringen eines Flüssigkeitsflms, enthaltend einen Polykieselsäureester, auf einen Basisträger
c) Einbringen des Trägers mit dem Flüssigkeitsfilm in eine Atmosphäre, die die Hydrolyse und weitere Polymerisation des Polykieselsäureesters bewirkt;
d)Hydrolyse und weitere Polymerisation des Polykieselsäureesters bei konstanter Temperatur;
e) Waschen der Kieselsäureschicht
f) Trocknung der Kieselsäureschicht,
wobei in Schritt b) der Flüssigkeitsfilm entweder durch Aufsprühen der Lösung aufgebracht wird oder die Flüssigkeit zunächst an einer Stelle aufgetragen wird und der Träger um die Auftragsstelle rotiert oder indem der Flüssigkeitsfilm mit einem Rollrakel verteilt wird.

2. Trennmaterial nach Anspruch 1, weiterhin **gekennzeichnet durch** eine Derivatisierung der Kieselgeloberfläche mit Separationseffektoren.

3. Trennmaterial nach einem oder beiden vorhergehenden Ansprüche 1 und 2, **gekennzeichnet durch** Mesoporen in der Trennschicht, die **durch** Behandlung mit wässriger Ammoniaklösung vergrößert worden sind.

4. Verfahren zur Herstellung einer in-situ durch Hydrolyse und Polymerisation erzeugten Trennmittelschicht auf einem Basisträger für die Dünnschichtchromatographie mit einer Schichtdicke von 2 - 20 µm mit folgenden Verfahrensschritten:
a) Reinigung des Basisträgers;
b) Aufbringen eines Flüssigkeitsfilms, enthaltend einen Polykieselsäureester auf einem Basisträger;
c) Einbringen des Trägers mit einem Flüssigkeitsfilm in eine Atmosphäre, die die Hydrolyse und weitere Polymerisation des Polykieselsäureesters bewirkt;
d) Hydrolyse und weitere Polymerisation des Polykieselsäureesters bei konstanter Temperatur;
e) Waschen der Kieselsäureschicht;
f) Trocknung der Kieselsäureschicht,
wobei in Schritt b) der Flüssigkeitsfilm entweder durch Aufsprühen der Lösung aufgebracht wird oder die Flüssigkeit zunächst an einer Stelle aufgetragen wird und der Träger um die Auftragsstelle rotiert oder indem der Flüssigkeitsfilm mit einem Rollrakel verteilt wird.

5. Verfahren nach Anspruch 4, wobei der besagte Flüssigkeitsfilm aufgebracht wird, indem man zunächst die Flüssigkeit an einer Stelle aufbringt und anschließend den Träger um die Auftragstelle rotiert, wobei die Rotationsachse senkrecht zur Fläche des Basisträgers ist.

6. Verwendung von Trennmaterialien nach einem der Ansprüche 1, 2 oder 3 für die dünnschichtchromatographische Trennung mindestens zweier Substanzen.

## Claims

1. Separating material for thin-layer chromatography having a base support and a separating-medium layer having a layer thickness of 2 - 20 µm produced in situ by hydrolysis and polymerisation, obtainable by the following working steps:
a) cleaning of the base support;
b) application of a liquid film comprising a polysilicic acid ester to a base support;
c) introduction of the support with the liquid film into an atmosphere which effects hydrolysis and further polymerisation of the polysilicic acid ester;
d) hydrolysis and further polymerisation of the polysilicic acid ester at constant temperature;
e) washing of the silicic acid layer;
f) drying of the silicic acid layer;
where, in step b), the liquid film is either applied by spraying-on of the solution or the liquid is firstly applied to one point and the support is rotated about the point of application or by distributing the liquid film using a roller coater.

2. Separating material according to Claim 1, further **characterised by** derivatisation of the silica-gel surface by means of separation effectors.

3. Separating material according to one or both of the preceding Claims 1 and 2, **characterised by** mesopores in the separating layer which have been enlarged by treatment with aqueous ammonia solution.

4. Process for the production of a separating-medium layer produced in situ by hydrolysis and polymerisation on a base support for thin-layer chromatography, having a layer thickness of 2 - 20 µm, comprising the following process steps:
a) cleaning of the base support;
b) application of a liquid film comprising a polysilicic acid ester to a base support;
c) introduction of the support with a liquid film into an atmosphere which effects hydrolysis and further polymerisation of the polysilicic acid ester;
d) hydrolysis and further polymerisation of the polysilicic acid ester at constant temperature;
e) washing of the silicic acid layer;
f) drying of the silicic acid layer;
where, in step b), the liquid film is either applied by spraying-on of the solution or the liquid is firstly applied to one point and the support is rotated about the point of application or by distributing the liquid film using a roller coater.

5. Process according to Claim 4, where the said liquid film is applied by firstly applying the liquid to one point and subsequently rotating the support about the point of application, where the axis of rotation is perpendicular to the surface of the base support.

6. Use of separating materials according to one of Claims 1, 2 or 3 for the thin-layer chromatographic separation of at least two substances.

## Revendications

1. Matériau de séparation pour chromatographie en couche mince comportant un support de base et une couche de milieu de séparation présentant une épaisseur de couche de 2 - 20 µm produite in situ par hydrolyse et polymérisation, pouvant être obtenu par les étapes opératoires suivantes :
a) nettoyage du support de base ;
b) application d'un film liquide comprenant un ester d'acide polysilicique sur un support de base ;
c) introduction du support muni du film liquide dans une atmosphère qui réalise une hydrolyse et en outre polymérisation de l'ester d'acide polysilicique ;
d) hydrolyse et en outre polymérisation de l'ester d'acide polysilicique à température constante ;
e) lavage de la couche d'acide silicique ;
f) séchage de la couche d'acide silicique ;
dans lequel, dans l'étape b), le film liquide est appliqué soit par pulvérisation de la solution, soit le liquide est tout d'abord appliqué en un point et le support est tourné autour du point d'application, soit en distribuant le film liquide en utilisant un applicateur à rouleau.

2. Matériau de séparation selon la revendication 1, **caractérisé en outre par** la dérivation de la surface en gel de silice au moyen d'effecteurs de séparation.

3. Matériau de séparation selon l'une des revendications 1 et 2 ou les deux, **caractérisé par** des mésopores dans la couche de séparation, lesquels ont été agrandis par traitement avec une solution aqueuse d'ammoniaque.

4. Procédé pour la production d'une couche de milieu de séparation produite in situ par hydrolyse et polymérisation sur un support de base pour chromatographie en couche mince, présentant une épaisseur de couche de 2 - 20 µm, comprenant les étapes de procédé suivantes :
a) nettoyage du support de base ;
b) application d'un film liquide comprenant un ester d'acide polysilicique sur un support de base ;
c) introduction du support muni du film liquide dans une atmosphère qui réalise une hydrolyse et en outre polymérisation de l'ester d'acide polysilicique ;
d) hydrolyse et en outre polymérisation de l'ester d'acide polysilicique à température constante ;
e) lavage de la couche d'acide silicique ;
f) séchage de la couche d'acide silicique ;
dans lequel, dans l'étape b), le film liquide film est appliqué soit par pulvérisation de la solution, soit le liquide est tout d'abord appliqué en un point et le support est tourné autour du point d'application, soit en distribuant le film liquide en utilisant un applicateur à rouleau.

5. Procédé selon la revendication 4, dans lequel ledit film liquide est appliqué en appliquant tout d'abord le liquide en un point et ensuite en tournant le support autour du point d'application, dans lequel l'axe de rotation est perpendiculaire à la surface du support de base.

6. Utilisation de matériaux de séparation selon l'une des revendications 1, 2 ou 3 pour la séparation par chromatographie en couche mince d'au moins deux substances.
